# EUROPÄISCHE PATENTANMELDUNG

(11) **EP 4 477 381 A1**
(43) Veröffentlichungstag der Anmeldung: **18.12.2024**
(21) Anmeldenummer: 24182197.4
(22) Anmeldetag: 14.06.2024
(51) Int. Cl.: B29C 48/12, B65D 19/18, B29C 48/16, B29C 48/06

(54) **UNTERLEGER, PALETTE MIT UNTERLEGER SOWIE VERFAHREN UND VORRICHTUNG ZUM EXTRUDIEREN VON UNTERLEGERN**

(30) Priorität: 14.06.2023 DE 102023115469
(71) Anmelder: Kellerholz GmbH & Co. KG, 77839 Lichtenau (DE)
(72) Erfinder: Keller, Jörg, 77855 Achern (DE)
(74) Vertreter: Mertzlufft-Paufler, Cornelius

(57) **Zusammenfassung**

Die Erfindung betrifft unter anderem einen Unterleger (1), insbesondere einen Palettenklotz, wobei der Unterleger (1) extrudiert ist und an zumindest einer Flachseite (2) zumindest eine beim Extrudieren erzeugte Nut (3) aufweist.

## Beschreibung

Die Erfindung betrifft einen Unterleger, insbesondere einen Palettenklotz, eine Transportpalette mit einem derartigen Unterleger, ein Verfahren zum Extrudieren von Unterlegern sowie eine Vorrichtung zum Extrudieren von Unterlegern.

Unterleger werden beispielsweise als Kanthölzer in der Transport- und Lagerlogistik eingesetzt und dienen dabei beispielsweise der Transportsicherung und Lagerung von Transportgut. Das Transportgut wird dabei in der Regel auf mehrere Unterleger, die auf einer Ladefläche oder einer Lagerfläche platziert sind, aufgesetzt. Zur Transportsicherung kann das Transportgut dann mit Transportsicherungsgurten festgezurrt werden. Die Unterleger sorgen für einen Abstand zwischen dem Transportgut und der Ladefläche bzw. der Lagerfläche und begünstigen den Einsatz von Hebezeugen genauso wie die Verwendung von Transportsicherungsgurten.

Unterleger werden in Form von Palettenklötzen auch als Bestandteile von Transportpaletten eingesetzt. Derartige Unterleger bestehen dabei oftmals aus vergleichsweise teurem Echtholz.

Aufgabe der Erfindung ist es, einen Unterleger der eingangs genannten Art und ein Verfahren sowie eine Vorrichtung zur Herstellung derartiger Unterleger bereitzustellen, die die wirtschaftliche Produktion von Unterlegern begünstigen.

Zur Lösung der Aufgabe wird zunächst ein Unterleger, insbesondere ein Palettenklotz, vorgeschlagen, der die Mittel und Merkmale des unabhängigen, auf einen Unterleger gerichteten Anspruchs aufweist. Zur Lösung der Aufgabe wird vorgeschlagen, dass der Unterleger extrudiert ist und an zumindest einer Flachseite eine beim Extrudieren erzeugte Nut aufweist.

Das Herstellen des Unterlegers durch Extrusion ermöglicht eine besonders effiziente Produktion der Unterleger auch in großen Stückzahlen und in unterschiedlichen Längen. Die beim Extrudieren des Unterlegers erzeugten Nut des Unterlegers kann einerseits den Materialbedarf bei der Herstellung der Unterleger und auch das Gewicht der Unterlegers reduzieren und andererseits als Führung und Aufnahme für einen Transportsicherungsgurt dienen.

Im Vergleich zu einer Nut, die in den Unterleger gefräst wird, ist eine Nut, die beim Extrudieren des Unterlegers erzeugt wird, einfacher und kostengünstiger herzustellen. Insofern hat der erfindungsgemäße Unterleger den Vorteil, dass ein separater Bearbeitungsschritt zum Erzeugen der zumindest einen Nut entfallen kann. Die Nut des erfindungsgemäßen Unterlegers kann direkt beim Extrudieren des Unterlegers in gewünschter Form und Größe erzeugt werden. Ferner hat die beim Extrudieren des Unterlegers erzeugte Nut den Vorteil, dass weniger Material zur Herstellung des Unterlegers benötigt wird. Da die Nut direkt beim Herstellen des Unterlegers erzeugt wird, ist es nicht notwendig, Material vom Unterleger zu entfernen, um die Nut zu erzeugen. Insgesamt wird so eine wirtschaftliche Herstellung von Unterlegern begünstigt.

Bei einer bevorzugten Ausführungsform des Unterlegers ist vorgesehen, dass der Unterleger an zumindest zwei unterschiedlichen, vorzugsweise an allen Flachseiten, jeweils zumindest eine beim Extrudieren erzeugte Nut aufweist. Auf diese Weise bleibt zumindest eine Nut, beispielsweise zum Einlegen und Führen eines Transportsicherungsgurtes, unabhängig davon zugänglich, mit welcher seiner Flachseite der Unterleger auf einer Oberfläche aufliegt.

Besonders bevorzugt besteht der Unterleger aus einem Materialgemisch, das Holz und Leim umfasst. Das Holz kann vorzugsweise Restholz umfassen oder vollständig aus Restholz bestehen, also aus Holzspänen und/oder Sägemehl und/oder Hackschnitzeln. Besonders bevorzugt kommen sogenannte Waldhackschnitzel zum Einsatz. Das Materialgemisch, das Holz und Leim umfasst, kann mittels eines Extruders durch eine entsprechend geformte Matrize gepresst werden, um den Unterleger mit der zumindest einen Nut im Extrusionsverfahren herzustellen.

Wenn der Holzanteil des Materialgemischs aus Waldhackschnitzeln besteht, ist eine besonders nachhaltige Nutzung des Rohstoffs Holz möglich. Die Waldhackschnitzel können beispielsweise bei der Herstellung von Holzbrettern aus Stammholz als Nebenprodukte anfallen. Wenn der erfindungsgemäße Unterleger aus einem Materialgemisch hergestellt wird, das Holz, nämlich Waldhackschnitzel umfasst, können die Waldhackschnitzel zunächst in Form von Unterlegern verwertet werden, bevor sie beispielsweise thermisch verwertet werden. Damit begünstigt der Unterleger eine nachhaltige und umfangreiche Verwertung der Ressource Holz.

Hat der Unterleger das Ende seines Lebenszyklus erreicht, kann er zerkleinert und sein Material erneut zur Herstellung von Unterlegern oder anderen Gegenständen genutzt oder anders, beispielsweise thermisch verwertet werden.

Der Unterleger kann beispielsweise eine rechteckige, vorzugsweise eine quadratische Querschnittsform aufweisen. Wenn der Unterleger eine quadratische Querschnittsform aufweist, kann er ohne Berücksichtigung, mit welcher seiner Flachseiten er auf einer Oberfläche aufliegt, genutzt werden.

Hat der Unterleger eine rechteckige, nicht quadratische Querschnittsform, kann er zwei unterschiedliche, von seiner Orientierung auf einer Ladefläche abhängige Auflagerhöhen anbieten. Dies kann die Variabilität des Unterlegers bei der Transportsicherung aber auch bei der Lagerung von Gegenständen erhöhen.

Der Unterleger kann zumindest zwischen zwei benachbarten Flachseiten ferner eine Fase aufweisen. Dies kann die Handhabung des Unterlegers bei seiner Nutzung vereinfachen und Verletzungen vorbeugen.

Zur Lösung der Aufgabe wird auch eine Transportpalette mit zumindest einem Unterleger nach einem der auf einen solchen gerichteten Ansprüche vorgeschlagen.

Zur Lösung der Aufgabe wird auch ein Verfahren zum Extrudieren von Unterlegern vorgeschlagen, das die Mittel und Merkmale des unabhängigen, auf ein derartiges Verfahren gerichteten Anspruchs aufweist. Dabei wird ein Materialgemisch, das Holz, insbesondere Restholz, vorzugsweise Holzspäne und/oder Sägemehl und/oder Hackschnitzel, insbesondere Waldhackschnitzel, und Leim umfasst, durch eine Matrize gepresst, die zur Erzeugung zumindest einer Nut in zumindest einer Flachseite der Unterleger beim Extrudieren der Unterleger eingerichtet ist, so dass beim Extrudieren der Unterleger zumindest eine Nut in zumindest einer Flachseite der Unterleger erzeugt wird.

Bei einer Variante des Verfahrens ist vorgesehen, dass die verwendete Matrize eine Querschnittsöffnung aufweist, die einen Querschnitt der Unterleger formt und zumindest einen nutformenden Vorsprung aufweist, der in die Matrizenöffnung ragt. Durch das Pressen des Materialgemischs durch die Matrize werden somit nicht nur die Unterleger mit der gewünschten Querschnittsform erzeugt, sondern auch die zumindest eine in zumindest einer Flachseite der Unterleger gewünschte Nut.

Die Unterleger können in einer definierten Länge von einem beim Extrudieren erzeugten Extrusionsstrang abgelängt werden. Dies begünstig die Flexibilität des Verfahrens zur Herstellung von Unterlegern mit unterschiedlichen Längen.

Zur Lösung der Aufgabe wird auch eine Vorrichtung zum Extrudieren von Unterlegern, insbesondere von Palettenklötzen, vorzugsweise nach einem der Ansprüche 1-4, vorgeschlagen, wobei die Vorrichtung zumindest eine Matrize aufweist, durch die die Unterleger extrudierbar sind, wobei die Matrize zur Erzeugung zumindest einer Nut in zumindest einer Flachseite der Unterleger beim Extrudieren der Unterleger eingerichtet ist.

Die Matrize der Vorrichtung kann eine einen Querschnitt der Unterleger formende Matrizenöffnung und zumindest einen nutformenden Vorsprung aufweisen, der in die Matrizenöffnung ragt. So ist es möglich, beim Extrudieren der Unterleger zumindest eine Nut an einer Flachseite der Unterleger zu erzeugen.

Bei einer Ausführungsform der Vorrichtung ist vorgesehen, dass die Matrize an zumindest zwei unterschiedlichen Seiten eines Randes, der die Matrizenöffnung begrenzt, jeweils zumindest einen nutformenden Vorsprung aufweist.

Die Vorrichtung kann einen Extruder umfassen, der dazu eingerichtet ist, ein Materialgemisch aus Holz, vorzugsweise Restholz, insbesondere aus Holzspänen und/oder Sägemehl und/oder Hackschnitzeln und/oder Waldhackschnitzeln, und Leim durch die Matrize zu pressen, um Unterleger zu extrudieren.

Die Vorrichtung kann eine Ablängvorrichtung aufweisen, die dazu eingerichtet ist, Unterleger von einem Extrusionsstrang abzulängen. So ist es möglich, Unterleger mit einer gewünschten Länge zu produzieren. Die Vorrichtung kann zur Durchführung des Verfahrens zum Extrudieren von Unterlegern nach einem der auf ein solches gerichteten Ansprüche eingerichtet sein.

Die Erfindung wird nachfolgend anhand von Ausführungsbeispielen näher beschrieben, ist aber nicht auf diese Ausführungsbeispiele beschränkt. Weitere Ausführungsbeispiele ergeben sich durch Kombination der Merkmale einzelner oder mehrerer Ansprüche untereinander und/oder durch Kombination einzelner oder mehrerer Merkmale der Ausführungsbeispiele. Es zeigen:
- Fig. 1: eine isometrische, ausgebrochene Darstellung eines extrudierten Unterlegers, der in jeder seiner vier Flachseiten, eine beim Extrudieren des Unterlegers erzeugte Nut aufweist,
- Fig. 2: eine stark schematisierte Ansicht einer Vorrichtung zum Extrudieren von Unterlegern sowie
- Fig. 3: eine Draufsicht auf eine Matrize der in Figur 2 gezeigten Vorrichtung, wobei die Matrize vier nutformende Vorsprünge aufweist, die in eine Matrizenöffnung hineinragen, die die Querschnittsform der Unterleger vorgibt.

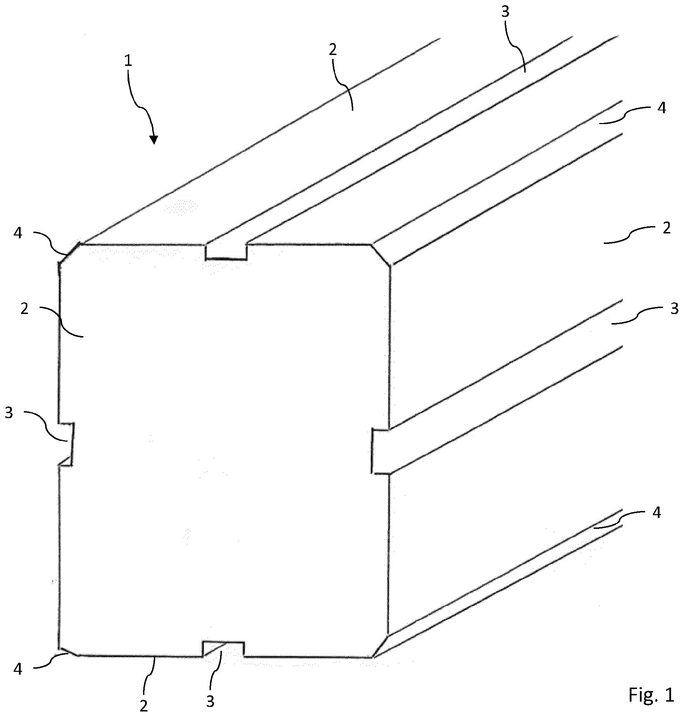

Figur 1 zeigt einen im Ganzen mit 1 bezeichneten Unterleger, der extrudiert ist und an jeder seiner vier Flachseiten 2 jeweils eine beim Extrudieren erzeugte Nut 3 aufweist. Der Unterleger 1 kann in beliebiger Länge extrudiert und beispielsweise als Palettenklotz verwendet werden.

Die Nuten 3 in den Flachseiten 2 des Unterlegers 1 können beispielsweise Transportsicherungsgurte aufnehmen, die als Transportsicherungsmittel zur Transportsicherung von Transportgut, das auf dem Unterleger 1 aufliegt, verwendet werden.

Der Unterleger 1 besteht aus einem Materialgemisch, das Holz und Leim umfasst. Der Holzanteil des Materialgemischs kann beispielsweise aus Restholz, beispielsweise aus Holzspänen und/oder Sägemehl und/oder Hackschnitzeln, bestehen. Besonders bevorzugt kommen sogenannte Waldhackschnitzel zur Herstellung des Unterlegers 1 zum Einsatz.

Waldhackschnitzel sind solche Hackschnitzel, die als Restholz bei der Verarbeitung von Holzstämmen anfallen.

Der in Figur 1 gezeigte Unterleger 1 hat eine rechteckige Querschnittsform mit den Maßen von 100 mm mal 80 mm. Es ist auch möglich, Unterleger mit einer quadratischen Querschnittsform und in anderen Abmessungen zu extrudieren.

Der Unterleger 1 weist zwischen zwei benachbarten Flachseiten 2 jeweils eine Fase 4 auf. Der in Figur 1 gezeigte Unterleger 1 kann bei entsprechender Länge beispielsweise als Palettenklotz einer Transportpalette, die in den Figuren nicht gesondert gezeigt ist, verwendet werden.

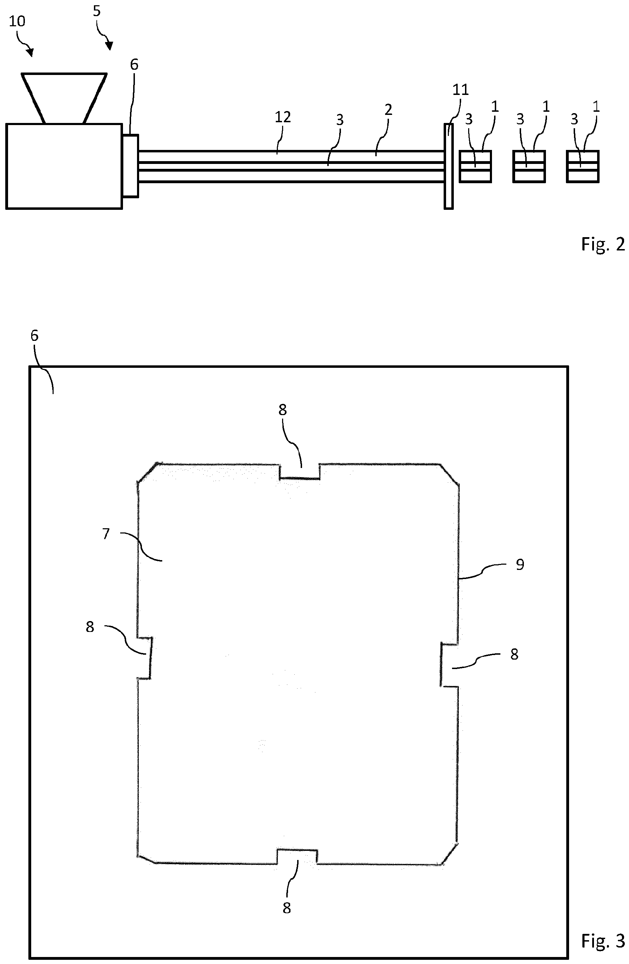

Figur 2 zeigt eine Vorrichtung 5 zum Extrudieren eines Unterlegers 1, wie er beispielsweise in Figur 1 gezeigt ist.

Die Vorrichtung 5 weist eine Matrize 6 auf, durch die Unterleger 1 extrudiert werden können, wobei die Matrize 6 zur Erzeugung zumindest einer Nut 3 in zumindest einer Flachseite 2 der Unterleger 1 beim Extrudieren der Unterleger 1 eingerichtet ist.

Figur 3 zeigt eine Einzelteildarstellung der Matrize 6 der in Figur 2 gezeigten Vorrichtung 5. Figur 3 zeigt, dass die Matrize 6 eine Matrizenöffnung 7 aufweist, die einen Querschnitt des Unterlegers 1 formt. Ferner weist die Matrize 6 vier nutformende Vorsprünge 8 auf, die in die Matrizenöffnung 7 ragen.

Wird ein Materialgemisch, aus dem die Unterleger 1 hergestellt werden sollen, durch die Matrizenöffnung 7 der Matrize 6 gepresst, werden die Unterleger 1 mit dem gewünschten Querschnitt und den insgesamt vier Nuten 3 in ihren Flachseiten 2 extrudiert.

Die in Figur 3 gezeigte Matrize 6 weist an vier unterschiedlichen Seiten eines Randes 9, der die Matrizenöffnung 7 begrenzt, jeweils einen nutformenden Vorsprung 8, also insgesamt vier Vorsprünge 8 auf.

Die Vorrichtung 5 umfasst einen Extruder 10, der dazu eingerichtet ist, ein Materialgemisch aus Holz, vorzugsweise aus Restholz, insbesondere aus Holzspänen und/oder Sägemehl und/oder Hackschnitzeln und/oder Waldhackschnitzeln, und Leim durch die Matrize 6 und ihre Matrizenöffnung 7 zu pressen, um Unterleger 1 zu Extrudieren.

Die Vorrichtung 5 weist ferner eine Ablängvorrichtung 11 auf, die dazu eingerichtet ist, Unterleger 1 von einem Extrusionsstrang 12 abzulängen.

Die Vorrichtung 5 ist zur Durchführung des nachfolgend erläuterten Verfahrens eingerichtet.

Dabei wird zum Extrudieren von Unterlegern 1 ein Materialgemisch, das Holz, insbesondere Restholz, vorzugsweise Holzspäne und/oder Sägemehl und/oder Hackschnitzel und/oder Waldhackschnitzel, und Leim umfasst, durch eine Matrize 6 gepresst, die zur Erzeugung zumindest einer Nut 3 in zumindest einer Flachseite 2 der Unterleger 1 eingerichtet ist, sodass beim Extrudieren der Unterleger 1 zumindest eine Nut 3 in zumindest einer Flachseite 2 der Unterleger 1 erzeugt wird.

Die Matrize 6, die bei der Durchführung des Verfahrens verwendet wird, weist eine Matrizenöffnung 7 auf, die einen Querschnitt der Unterleger 1 formt. Ferner weist die Matrize 6 mehrere nutformende Vorsprünge 8 auf, die in die Matrizenöffnung 7 ragen und die Nuten 3 in den Flachseiten 2 der Unterleger beim Extrudieren der Unterleger 1 erzeugen.

Die Unterleger 1 werden anschließend in einer definierten Länge von einem beim Extrudieren erzeugten Extrusionsstrang 12 abgelängt. Dies geschieht mit der zuvor bereits erwähnten Ablängvorrichtung 11 der Vorrichtung 5.

### Bezugszeichenliste

- 1: Unterleger
- 2: Flachseite
- 3: Nut
- 4: Fase
- 5: Vorrichtung
- 6: Matrize
- 7: Matrizenöffnung
- 8: nutformender Vorsprung
- 9: Rand von 6
- 10: Extruder
- 11: Ablängvorrichtung
- 12: Extrusionsstrang

## Patentansprüche

1. Unterleger (1), insbesondere Palettenklotz, wobei der Unterleger (1) extrudiert ist und an zumindest einer Flachseite (2) zumindest eine beim Extrudieren erzeugte Nut (3) aufweist.

2. Unterleger (1) nach dem vorherigen Anspruch, wobei der Unterleger (1) an zumindest zwei unterschiedlichen, vorzugsweise an allen, Flachseiten (2) jeweils zumindest eine beim Extrudieren erzeugte Nut (3) aufweist.

3. Unterleger (1) nach einem der beiden vorherigen Ansprüche, wobei der Unterleger (1) aus einem Materialgemisch besteht, das Holz, vorzugsweise Restholz, insbesondere Holzspäne und/oder Sägemehl und/oder Hackschnitzel und/oder Waldhackschnitzel, und Leim umfasst.

4. Unterleger (1) nach einem der vorherigen Ansprüche, wobei der Unterleger (1) eine rechteckige, vorzugsweise eine quadratische, Querschnittsform aufweist, und/oder wobei der Unterleger (1) zumindest zwischen zwei benachbarten Flachseiten (2) eine Fase (4) aufweist.

5. Transportpalette mit zumindest einem Unterleger (1) nach einem der vorherigen Ansprüche.

6. Verfahren zum Extrudieren von Unterlegern (1), vorzugsweise nach einem der vorherigen Ansprüche, wobei ein Materialgemisch, das Holz, insbesondere Restholz, vorzugsweise Holzspäne und/oder Sägemehl und/oder Hackschnitzel und/oder Waldhackschnitzel, und Leim umfasst, durch eine Matrize (6) gepresst wird, die zur Erzeugung zumindest einer Nut (3) in zumindest einer Flachseite (2) der Unterleger (1) eingerichtet ist, sodass beim Extrudieren der Unterlegers (1) zumindest eine Nut (3) in zumindest einer Flachseite (2) der Unterlegers (1) erzeugt wird.

7. Verfahren nach dem vorherigen Anspruch, wobei die Matrize (6) eine einen Querschnitt des Unterlegers (1) formende Matrizenöffnung (7) und zumindest einen nutformenden Vorsprung (8) aufweist, der in die Matrizenöffnung (7) ragt.

8. Verfahren nach einem der vorherigen Ansprüche, wobei der Unterleger (1) in einer definierten Länge von einem beim Extrudieren erzeugten Extrusionsstrang (12) abgelängt wird.

9. Vorrichtung (5) zum Extrudieren von Unterlegern (1), insbesondere von Palettenklötzen, vorzugsweise nach einem der Ansprüche 1 bis 4, wobei die Vorrichtung (5) zumindest eine Matrize (6) aufweist, durch die die Unterleger (1) extrudierbar sind, wobei die Matrize (6) zur Erzeugung zumindest einer Nut (3) in zumindest einer Flachseite (2) der Unterleger (1) beim Extrudieren der Unterleger (1) eingerichtet ist.

10. Vorrichtung (5) nach dem vorherigen Anspruch, wobei die Matrize (6) eine einen Querschnitt der Unterleger (1) formende Matrizenöffnung (7) und zumindest einen nutformenden Vorsprung (8) aufweist, der in die Matrizenöffnung (7) ragt.

11. Vorrichtung (5) nach dem vorherigen Anspruch, wobei die Matrize (6) an zumindest zwei unterschiedlichen Seiten eines Randes (9), der die Matrizenöffnung (7) begrenzt, jeweils zumindest einen nutformenden Vorsprung (8) aufweist.

12. Vorrichtung (5) nach einem der vorherigen Ansprüche, wobei die Vorrichtung (5) einen Extruder (10) aufweist, der dazu eingerichtet ist, ein Materialgemisch aus Holz, vorzugsweise Restholz, insbesondere Holzspäne und/oder Sägemehl und/oder Hackschnitzel und/oder Waldhackschnitzel, und Leim durch die Matrize (6) zu pressen, um Unterleger (1) zu extrudieren.

13. Vorrichtung (5) nach einem der vorherigen Ansprüche, wobei die Vorrichtung (5) eine Ablängvorrichtung (11) aufweist, die dazu eingerichtet ist, Unterleger (1) von einem Extrusionsstrang (12) abzulängen.
